(19) Europäisches Patentamt
European Patent Office
Office européen des brevets

(11) **EP 0 819 304 B1**

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(21) Anmeldenummer: **96907445.9**

(22) Anmeldetag: **13.03.1996**

(51) Int Cl.⁶: **G11B 5/02**

(86) Internationale Anmeldenummer:
**PCT/EP96/01059**

(87) Internationale Veröffentlichungsnummer:
**WO 96/31874 (10.10.1996 Gazette 1996/45)**

(54) **VERFAHREN UND VORRICHTUNG ZUM LESEN MAGNETISCH GESPEICHERTER SIGNALE**

PROCESS AND DEVICE FOR READING MAGNETICALLY RECORDED SIGNALS

PROCEDE ET DISPOSITIF PERMETTANT DE LIRE DES SIGNAUX MEMORISES MAGNETIQUEMENT

(84) Benannte Vertragsstaaten:
**CH DE FR IT LI**

(30) Priorität: **07.04.1995 DE 19513302**

(43) Veröffentlichungstag der Anmeldung:
**21.01.1998 Patentblatt 1998/04**

(73) Patentinhaber: **AGFA-GEVAERT AG**
**51301 Leverkusen (DE)**

(72) Erfinder: **WEINERT, Volker**
**D-82024 Taufkirchen (DE)**

(56) Entgegenhaltungen:
**US-A- 4 523 238**

- **DATABASE WPI Section EI, Week 8542 Derwent Publications Ltd., London, GB; Class T03, AN 85-262342 XP002008037 & SU,A,1 150 644 (GRUDEV K L) , 15.April 1985**
- **DIETER NÜHRMANN: "Das Gro e Werkbuch Elektronik, Teil B" 1989 , FRANZIS , MÜNCHEN XP002008036 siehe Seite 1403 - Seite 1425 Insbesondere Kapitel E., Seiten 1414 - 1417**
- **PATENT ABSTRACTS OF JAPAN vol. 017, no. 461 (P-1598), 23.August 1993 & JP,A,05 107628 (CANON INC), 30.April 1993, & US,A,5 416 545**
- **PATENT ABSTRACTS OF JAPAN vol. 017, no. 461 (P-1598), 23.August 1993 & JP,A,05 107627 (CANON INC), 30.April 1993,**
- **PATENT ABSTRACTS OF JAPAN vol. 017, no. 461 (P-1598), 23.August 1993 & JP,A,05 107626 (CANON INC), 30.April 1993,**
- **PATENT ABSTRACTS OF JAPAN vol. 017, no. 341 (P-1565), 28.Juni 1993 & JP,A,05 045716 (CANON INC), 26.Februar 1993,**
- **DATABASE WPI Section EI, Week 9014 Derwent Publications Ltd., London, GB; Class T03, AN 90-106599 XP002008038 & SU,A,1 509 989 (KIEV PERIPHERAL EQU) , 23.September 1989**

## Beschreibung

Die Erfindung betrifft ein Verfahren nach dem Oberbegriff des Anspruchs 1 und eine Vorrichtung zur Durchführung dieses Verfahrens nach dem Oberbegriff des Anspruchs 4.

Ein Verfahren der eingangs genannten Art zum Auslesen magnetisch gespeicherter Signale geht z. B. aus der US 4,964,139 A hervor. Weiter sind aus der US-Patentschrift 4,977,419 fotografische Filme bekannt, die eine sehr dünne, transparente Magnetschicht flächendeckend als zusätzliche Schicht enthalten. Auf dieser Magnetschicht können die verschiedensten Signale, z. B. von dem Aufnahmevorgang in der Kamera her gespeichert sein, die für die Verarbeitung der entwickelten Filme hilfreich sind. Für das Lesen solcher Magnetsignale wird dabei auf übliche Einrichtungen zur Erfassung der magnetischen Signale verwiesen.

Es hat sich jedoch gezeigt, daß die Forderung der hohen Transparenz des unbelichteten Films nach der Entwicklung nur eine Magnetschicht mit sehr wenig magnetischem Material zuläßt. Damit können die mit Magnetschreibköpfen aufgezeichneten Signale nur außerordentlich schwache Magnetfelder bilden und dementsprechend in den Wicklungen gegenüber der Magnetschicht relativ bewegter Magnetköpfe nur sehr geringe Ströme induzieren. Die üblicherweise zum Auslesen von magnetischen Impulsen abgestimmten Leseeinrichtungen sind ausgerichtet auf nichttransparente und dementsprechend mit viel magnetischen Stoffen angereicherte Magnetschichten, die auch entsprechend starke Signale liefern. Aus transparenten Magnetschichten auslesbare Signale dürften wenigstens um den Faktor 200 schwächer sein als solche aus üblichen Schichten zur Aufzeichnung von Ton- oder Computer-Daten.

Aus der Druckschrift SU 1 150 644 A (vgl. die entsprechende englischsprachige Zusammenfassung von Derwent Publications AN 85-262 342) ist ein Verfahren zum Lesen magnetisch gespeicherter Signale bekannt, wobei die Signale eines an eine Magnetschicht angedrückten Magnetlesekopfes zur weiteren Verarbeitung vorverstärkt werden, wobei der Magnetlesekopf durch den Vorverstärker im Kurzschluß betrieben wird. Nähere Angaben über die weitere Verarbeitung der vorverstärkten Signale sind dieser Druckschrift nicht zu entnehmen. Insbesondere ist darin keine Digitalisierung, Filterung, Differenzierung und Bewertung offenbart.

Aufgabe der Erfindung ist es deshalb, eine für das Auslesen extrem schwacher Magnetsignale geeignete Vorgehensweise zu schaffen.

Diese Aufgabe wird gelöst durch die Merkmale der Ansprüche 1 und 4. Einen Magnetlesekopf durch den Vorverstärker im Kurzschlußbetrieb zu betreiben heißt, daß der Innenwiderstand $R_i$ des Magnetkopfes sehr groß ist gegenüber dem Eingangswiderstand $R_e$ des unmittelbar der Magnetkopfwicklung nachgeschalteten Verstärkers. Wenn nach einer besonders günstigen Ausgestaltung der Erfindung zur Vorverstärkung ein durch einen Widerstand rückgekoppelter operativer Verstärker verwendet wird, so soll dieser eine möglichst hohe Leerlaufverstärkung $A_o$ von mehr als $10^6$ haben bei sehr geringem Eigenrauschen. Ein solcher Verstärker kann sehr hochohmig, z. B. mit einigen 10 MΩ rückgekoppelt werden, so daß sich bei einer sehr guten niederohmigen Tonkopfwicklung in der Größenordnung von 150 Ohm ein Eingangswiderstand des Verstärkers in der Größenordnung von 4 - 5 Ohm ergibt. Weitere Einzelheiten der Erfindung und einer Vorrichtung zur Durchführung des beanspruchten Verfahrens ergeben sich aus den Unteransprüchen. Ein Ausführungsbeispiel einer Schaltung nach der Erfindung ist in der angefügten Figur dargestellt.

In dieser Figur ist mit 1 das fotografische Filmband mit der sehr dünnen Magnetschicht bezeichnet, das an einem Magnetlesekopf 2 mit einer Wicklung 3 in einem Filmverarbeitungsgerät, z. B. einem Kopiergerät, vorbeigeführt wird. Eines der Probleme ist, daß sowohl in der Kamera als auch im Zuge eines Kopiervorganges eine konstante Relativgeschwindigkeit zwischen Film 1 und Magnetkopf 2 nicht garantiert werden kann, da die Transportgeschwindigkeit des Films sich vorrangig nach den Betriebsbedingungen der Kamera oder eines Kopiergerätes richtet.

Der Innenwiderstand der Magnetkopfwicklung 3 ist durch den Widerstand 4 symbolisch im Ersatzschaltbild dargestellt. Die Wicklung 3 ist einerseits an Masse, zum anderen an dem negativen Eingang 5a eines Operationsverstärkers 5 angeschlossen. Dieser Operationsverstärker hat eine sehr hohe Leerlaufverstärkung $A_o$ von mehr als $10^6$, insbesondere von $5 \times 10^6$ und ein geringes Eigenrauschen. Der negative Eingang 5a dieses Operationsverstärkers ist über einen Rückkopplungswiderstand 6 mit dem Ausgang 5c des Operationsverstärkers verbunden. An dem positiven Eingang 5b des Operationsverstärkers liegt ein Widerstand 10 gegen Masse, während ein Mitkopplungswiderstand 9 den Eingang 5b mit dem Ausgang 5c verbindet. Der Ausgang 5c des Operationsverstärkers 5 ist dann mit einem Analog-Digital-Konverter 11 verbunden, der die Daten an einen Datenpuffer 12 und schließlich an eine Einrichtung zum Filtern, Differenzieren und Bewerten der Signale in Form eines Mikroprozessors 13 liefert. An dessen Ausgang sind dann digitale Signale zur Steuerung von Verarbeitungsvorgängen des Films 1 entnehmbar.

Die beschriebene Vorverstärkung mittels des Operationsverstärkers 5 erlaubt es, auch bei wechselnden Relativgeschwindigkeiten zwischen dem Filmband 1 und dem Magnetkopf 2, insbesondere bei sehr niedrigen Geschwindigkeiten vergleichsweise hohe und gut verarbeitbare Signale am Ausgang 5c zu liefern. Der Kurzschlußbetrieb erlaubt es, auch bei kleinen, induzierten Strömen die Leerlaufverstärkung von mehr als $10^6$ zu nutzen. Schädliche Rückwirkungen des hochverstärkten Signals auf die Magnetisierung der Magnetschicht des Films 1 sind dabei nicht zu befürchten, weil die von den Magnetfeldern der Magnetschicht gelieferten Ausgangsströme kontrollierbar gering sind und deshalb auch die Rückwirkungen keine die Magnetisierung gefährdende Größe erreichen können.

Das Widerstandsnetzwerk 9 und 10 an dem positiven Eingang des Operationsverstärkers 5 erlaubt über eine Mitkopplung eine weitgehende Kompensation des Innenwiderstandes $R_i$ der Magnetkopfwicklung 3, wobei zweckmäßigerweise für das Verhältnis der Widerstandswerte die folgende Gleichung berücksichtigt wird:

$$\frac{R_{f-}}{R_i} \approx 0{,}8\,\frac{R_{f+}}{R}$$

Bei einem solchen Verhältnis der Widerstandswerte ergibt sich eine Kompensation zu etwa 80 %, die eine hohe Verstärkung weiter unterstützt, ohne daß dabei Instabilitäten, d. h. die Gefahr des Aufschaukelns, eintreten.

Auf diese Weise rauscharm verstärkte Lesesignale werden dann digitalisiert, zwischengespeichert und nach einer Filter- und Differenzierstufe durch eine Bewertungsschaltung in Steuersignale umgesetzt.Die wirksame Filterung mit speziell angepaßten Filtern und die dem Zweck angepaßte Differenzierung wird durch dieses Art der Verstärkung im Kurzschluß erst ermöglicht.

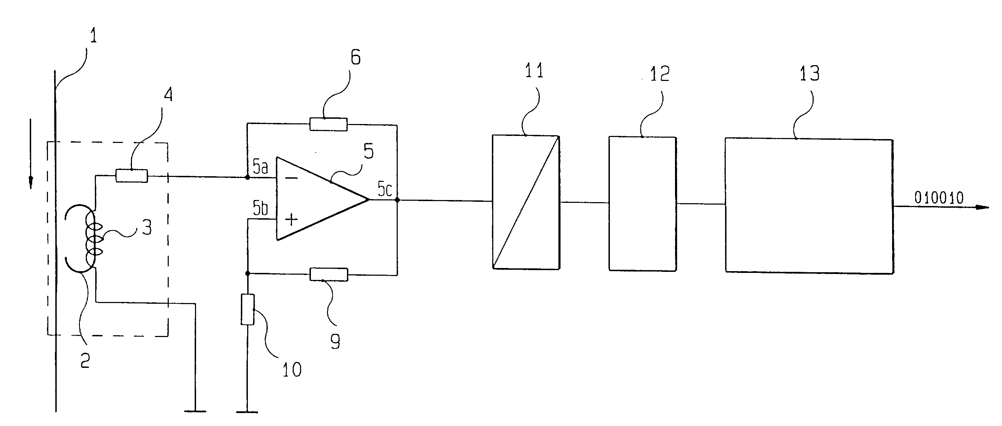

**Patentansprüche**

1. Verfahren zum Lesen magnetisch gespeicherter Signale von einem mit einer transparenten, dünnen Magnetschicht versehenen fotografischen Film (1), wobei die Signale eines an den bewegten Film (1) angedrückten Magnetlesekopfes (2) vorverstärkt und die vorverstärkten Signale ausgewertet werden, wobei der Magnetlesekopf (2) durch den Vorverstärker (5) im Kurzschluß betrieben wird und wobei die vorverstärkten Signale digitalisiert, gefiltert, differenziert und bewertet werden.

2. Verfahren nach Anspruch 1 wobei als Vorverstärker (5) ein Operationsverstärker mit sehr hoher Leerlaufverstärkung $A_o$ von mehr als $10^6$ und geringem Eigenrauschen verwendet wird.

3. Verfahren nach Anspruch 1 oder 2, wobei der Operationsverstärker (5) zur teilweisen Kompensation des Lesekopfinnenwiderstandes $R_i$ über ein Widerstandsnetzwerk (9, 10) mitgekoppelt wird.

4. Schaltung zum Lesen magnetisch gespeicherter Signale von einem mit einer transparenten, dünnen Magnetschicht versehenen fotografischen Film (1), wobei die Signale eines an den bewegten Film (1) angedrückten Magnetlesekopfes (2) in einem Verstärker (5) vorverstärkt und die vorverstärkten Signale ausgewertet werden, wobei der Eingangswiderstand ($R_e$) des Verstärkers (5) sehr klein ist gegenüber dem Innenwiderstand ($R_i$) des Magnetlesekopfes (2) dadurch gekennzeichnet, daß Einrichtungen (11, 13) zum Digitalisieren, Filtern, Differenzieren und Bewerten der vorverstärkten Signale vorgesehen sind.

5. Schaltung nach Anspruch 4 wobei der Verstärker (5) als Operationsverstärker (5) mit einer Leerlaufverstärkung $A_o$ von etwa $5 \times 10^6$ ausgebildet ist.

6. Schaltung nach Anspruch 5 wobei zur teilweisen Kompensation des Lesekopfinnenwiderstandes ($R_i$) der Operationsverstärker (5) an seinem positiven Eingang (5b) mitgekoppelt ist.

7. Schaltung nach Anspruch 6 wobei in dem Widerstandsnetzwerk (9, 10) die Mitkopplung

$$\frac{R_{f-}}{R_i} \approx 0{,}8\,\frac{R_{f+}}{R}$$

beträgt, d. h. daß die Kompensation zu etwa 80 % erfolgt, wobei

$R_{f-}$  der Rückführungswiderstand am negativen Eingang des Operationsverstärkers,

$R_i$  der Innenwiderstand des Magnetkopfes,

$R_{f+}$  der Rückführungswiderstand am positiven Eingang des Operationsverstärkers und

$R$  der Widerstand zwischen Masse und dem positiven Eingang des Operationsverstärkers ist.

8. Schaltung nach einem der Ansprüche 4 bis 7 wobei der Ausgang (5c) des Verstärkers (5) mit einem Analog-Digitalwandler (11), einer Filter- und Differenziereinrichtung und einer Signalbewertungseinrichtung (13) verbunden ist.

**Claims**

1. Process for reading magnetically recorded signals from a photographic film (1) provided with a transparent thin magnetic layer, wherein the signals of a magnetic reading head (2) applied to the moving film (1) are preamplified and the preamplified signals are evaluated, wherein the magnetic reading head (2) is operated by the preamplifier (5) in short circuit and wherein the preamplified signals are digitized, filtered, differentiated and weighted.

2. Process according to Claim 1, wherein an operational amplifier having very high open-loop gain $A_o$ of more than $10^6$ and low inherent noise is used as preamplifier (5).

3. Process according to Claim 1 or 2, wherein the operational amplifier (5) is positively fed back via a resistance network (9, 10) to compensate partially for the reading head internal resistance ($R_i$).

4. Circuit for reading magnetically recorded signals from a photographic film (1) provided with a transparent thin magnetic layer, wherein the signals of a magnetic reading head (2) applied to the moving film (1) are preamplified in an amplifier (5) and the preamplified signals are evaluated, wherein the input resistance ($R_e$) of the amplifier (5) is very low compared with the internal resistance ($R_i$) of the magnetic reading head (2), and wherein devices (11, 13) are provided for digitizing, filtering, differentiating and weighting the preamplified signals.

5. Circuit according to Claim 4, wherein the amplifier (5) is designed as operational amplifier (5) having an open-loop gain $A_o$ of about $5 \times 10^6$.

6. Circuit according to Claim 5, wherein the operational amplifier (5) is positively fed back at its positive input (5b) to compensate partially for the reading head internal resistance ($R_i$).

7. Circuit according to Claim 6, wherein the positive feedback in the resistance network (9, 10) is

$$\frac{R_{f-}}{R_i} \approx 0.8 \, \frac{R_{f+}}{R}$$

i.e. the compensation is about 80%, where

$R_{f-}$ is the feedback resistance at the negative input of the operational amplifier,

$R_i$ is the internal resistance of the magnetic head,

$R_{f+}$ is the feedback resistance at the positive input of the operational amplifier and

$R$ is the resistance between earth and the positive input of the operational amplifier.

8. Circuit according to one of Claims 4 to 7, wherein the output (5c) of the amplifier (5) is connected to an analog/digital converter (11), a filter and differentiating device and a signal weighting device (13).

**Revendications**

1. Procédé destiné à lire des signaux mémorisés par voie magnétique d'un film (1) photographique muni d'une mince couche magnétique transparente, les signaux d'une tête de lecture magnétique (2), appuyée contre le film (1) mobile, étant pré-amplifiés et les signaux pré-amplifiés étant analysés, dans lequel procédé la tête de lecture magnétique (2) est actionnée en court-circuit par le pré-amplificateur (5) et dans lequel procédé les signaux pré-amplifiés sont numérisés, filtrés, comparés et analysés.

2. Procédé selon la revendication 1, dans lequel le pré-amplificateur (5) utilisé est un amplificateur opérationnel présentant une amplification en boucle ouverte ($A_o$) très élevée, supérieure à $10^6$, et un faible bruit de fond.

3. Procédé selon la revendication 1 ou 2, dans lequel l'amplificateur opérationnel (5) est couplé en rétroaction par l'intermédiaire d'un réseau à impédance (9, 10) afin de compenser partiellement la résistance interne ($R_i$) de la tête de lecture.

4. Circuit destiné à lire des signaux mémorisés par voie magnétique d'un film (1) photographique muni d'une mince couche magnétique transparente, les signaux d'une tête de lecture magnétique (2), appuyée contre le film (1) mobile, étant pré-amplifiés dans un amplificateur (5) et les signaux pré-amplifiés étant analysés, dans lequel circuit la résistance inhérente ($R_e$) de l'amplificateur (5) est très faible par rapport à la résistance interne ($R_i$) de la tête de lecture magnétique (2), caractérisé en ce qu'il est prévu des dispositifs (11, 13) destinés à numériser, filtrer, différencier et évaluer les signaux pré-amplifiés.

5. Circuit selon la revendication 4, dans lequel l'amplificateur (5) est conçu sous forme d'amplificateur opérationnel (5) présentant une amplification en boucle ouverte ($A_o$) égale à $5 \times 10^6$ environ.

6. Circuit selon la revendication 5, dans lequel l'amplificateur opérationnel (5) est couplé en rétroaction à son entrée positive (5b) afin de compenser partiellement la résistance interne ($R_i$) de la tête de lecture.

7. Circuit selon la revendication 6, dans lequel le couplage en rétroaction dans le réseau à impédance (9, 10) est de l'ordre de

$$\frac{R_{f-}}{R_i} \simeq 0.8 \, \frac{R_{f-}}{R}$$

c'est-à-dire que la compensation est égale à 80 % environ, dans laquelle formule

$R_{f-}$　　est la résistance en chaîne de retour au niveau de l'entrée négative de l'amplificateur opérationnel,

$R_i$　　la résistance interne de la tête de lecture magnétique,

$R_{f+}$　　la résistance en chaîne de retour au niveau de l'entrée positive de l'amplificateur opérationnel et

$R$　　la résistance entre la masse et l'entrée positive de l'amplificateur opérationnel.

8. Circuit selon l'une quelconque des revendications 4 à 7, dans lequel la sortie (5c) de l'amplificateur (5) est reliée à un convertisseur analogique/numérique (11), un dispositif de filtrage et de différenciation et un dispositif (13) d'évaluation des signaux.

010010

13

12

11

6

5

5c

9

5a

5b

10

4

3

1

2